# EUROPÄISCHE PATENTSCHRIFT

(11) **EP 0 747 409 B1**
(45) Veröffentlichungstag und Bekanntmachung des Hinweises auf die Patenterteilung: **26.04.2000**
(21) Anmeldenummer: 96108407.6
(22) Anmeldetag: 28.05.1996
(51) Int. Cl.: C08G 18/08, C08G 18/65

(54) **Thermoplastische Polyurethan-Elastomere**
Thermoplastic polyurethane elastomers
Elastomères thermoplastiques de polyuréthane

(30) Priorität: 07.06.1995 DE 19520732
(43) Veröffentlichungstag der Anmeldung: 11.12.1996
(73) Patentinhaber: BAYER AG, 51368 Leverkusen (DE)
(72) Erfinder: Kirchmeyer, Stephan, Dr., 51375 Leverkusen (DE); Müller, Hanns-Peter, Dr., 51519 Odenthal (DE); Ullrich, Martin, 51375 Leverkusen (DE); Liesenfelder, Ulrich, 51469 Bergisch Gladbach (DE)

(56) Entgegenhaltungen:
- EP-A- 0 097 899
- EP-A- 0 519 734
- DE-A- 2 823 762

## Beschreibung

Die vorliegende Erfindung betrifft thermoplastische Polyurethanelastomere, ein Verfahren zu ihrer Herstellung und ihre Verwendung.

Thermoplastische Polyurethane (TPU) sind von Bedeutung, weil sie gute Elastomereigenschaften besitzen und leicht thermoplastisch verarbeitet werden können. Durch geeignete Auswahl der Komponenten läßt sich eine große Variationsbreite mechanischer Eigenschaften erzielen. Eine Übersicht über TPU, ihre Eigenschaften und Anwendungen werden z.B. in Kunststoffe 68 (1978), S. 819-825, Kautschuk, Gummi, Kunststoffe 35 (1982) S. 569-584 und G. Becker, D. Braun Kunststoff-Handbuch, Bd. 7 "Polyurethane", München, Wien, Carl Hanser Verlag 1983 gegeben. Ein Überblick über die Herstellverfahren gibt Plastverarbeiter 40 (1989).

TPU werden aus zumeist linearen Polyolen, wie Polyester- oder Polyetherpolyolen, organischen Diisocyanaten und kurzkettigen zumeist difunktionellen Alkoholen (Kettenverlängerern) aufgebaut. Sie können kontinuierlich oder diskontinuierlich hergestellt werden. Die bekanntesten Herstellverfahren sind das Bandverfahren und das Extruderverfahren.

Beim Bandverfahren werden die Ausgangsstoffe in einen Mischkopf dosiert und in noch niedrigviskosem Zustand in sehr kurzer Zeit intensiv miteinander vermischt. Anschließend wird die Reaktionsmasse auf ein umlaufendes Stahl- oder Kunststoffband ausgetragen, auf dem die Mischung unter Wärmezufuhr reagiert und sich verfestigt (GB-PS 1 057 018; DE-OS 3 224 324).

Beim Extruderverfahren werden die Ausgangsstoffe zusammen in einem Schneckenreaktor dosiert, dort polyaddiert und anschließend in eine gleichmäßige Granulatform überführt (US-PS 3 642 964; DE-PS 2 302 564; DE-PS 2 549 371; DE-OS 3 230 009; EP-OS 0 031 142).

Der Vorteil des Bandverfahrens liegt in der kurzen Mischzeit der Ausgangsstoffe und der anschließenden scherungsfreien und daher ungestörten Reaktion. Die resultierenden Polyurethane weisen eine sehr gute Phasensegregation auf und sind besonders für Folien geeignet. Der Nachteil des Bandverfahrens liegt in der aufwendigen Aufarbeitung der nach diesem Verfahren primär erhaltenen Polymer-Platten oder -Stränge. Diese weisen keinen gleichmäßigen Polymeraufbau auf und müssen nachträglich zu einem homogenen Granulat zerkleinert und wieder extrudiert werden.

Dem gegenüber ist das Extruderverfahren einfach und kostengünstig, die Ausgangsstoffe werden jedoch erst im Extruder unter Bedingungen gemischt, bei denen eine Polyaddition bereits eintritt. Dadurch treten an bestimmten Stellen des Extruders hohe Konzentrationen einer Komponente und unerwünschte und nichtkontrollierbare Nebenreaktionen auf. Zudem werden die Polyurethane während der gesamten Herstellungszeit stark geschert. Durch diese Einflüsse wird die während der Polyaddition stattfindende Phasensegregation stark gestört und die resultierenden Polyurethane sind für bestimmte Zwecke, z.B. Folienherstellung, nur in geringem Maße geeignet.

In EP-A 0 554 718 und EP-A 0 554 719 wird vorgeschlagen, das Extruderverfahren dadurch zu verbessern, daß die Ausgangsstoffe in einer Düse zusammengeführt und vor Eintritt in den Extruder gemischt werden. Der Hauptteil der Polyadditionsreaktion findet auch hier im Extruder statt, so daß das TPU während der Herstellung stark geschert und daher geschädigt wird.

In DE-A 2 823 762 wird ein Verfahren zur Herstellung von thermoplastischen Polyurethanen beschrieben, bei dem eine Mischung aus Polyisocyanaten, Polyolen, Kettenverlängerungsmitteln und gegebenenfalls Zusatzstoffen in einem ersten Statikmischer vermischt werden, ohne daß es zur Reaktion kommt. Diese Mischung wird dann mittels einer Präzisionspumpe in einen zweiten Statikmischer eingespeist und zur Reaktion gebracht.

Es besteht also weiterhin ein großes Interesse an TPU mit verbesserten Eigenschaften sowie an Verfahren, welche die vorgenannten Nachteile vermeiden, so daß Polyurethane kontrolliert und mit gezielten Eigenschaften hergestellt werden können.

Es wurde gefunden, daß man, um TPU mit verbesserten Eigenschaften zu erhalten, das Isocyanat mit der gegenüber Isocyanat reaktiven Komponente in einem Statikmischer unter Bedingungen mischen muß, unter denen zwischen den beiden Komponenten noch keine Reaktion eintritt, und danach in einem zweiten Statikmischer vollständig umsetzen muß.

Durch diese Verfahrensweise werden homogene TPU mit gegenüber den bekannten Verfahren stark verbesserte Eigenschaften erhalten.

Dies war nicht zu erwarten.

Gegenstand der Erfindung ist ein Verfahren zur Herstellung thermoplastischer Polyurethanelastomere, worin man ein oder mehrere Isocyanate (A), bevorzugt organische Diisocyanate und eine zerewitinoffaktive Wasserstoffatome aufweisende Mischung (B) aus
1. 1 bis 85 Äquivalent-%, vorzugsweise 5 bis 70 Äquivalent-% (bezogen auf die Isocyanatgruppen in (A)) einer oder mehreren Verbindungen mit im Mittel mindestens 1,8 zerewitinoffaktiven Wasserstoffatomen und einem Molekulargewicht von 450 bis 10 000,
2. 15 bis 99 Äquivalent-%, vorzugsweise 30 bis 95 Äquivalent-% (bezogen auf die Isocyanatgruppen in (A)) einer oder mehrerer Kettenverlängerungsmittel mit im Mittel mindestens 1,8 zerewitinoffaktiven Wasserstoffatomen und einem Molekulargewicht von 62 bis 400, sowie gegebenenfalls

0 bis 20 Gew.-% (bezogen auf Gesamtmenge an thermoplastischem Polyurethanelastomer) weiterer üblicher Hilfs- und Zusatzstoffe C) in einem Statikmischer mit einer Schergeschwindigkeit von >100s⁻¹ bis 100 000s⁻¹ homogen vermischt, so daß keine Reaktion zwischen (A) und (B) eintritt, und danach das Gemisch einem zweiten Statikmischer mit einer Schergeschwindigkeit von <100s⁻¹ zuführt, in dem (A) und (B) miteinander reagieren.

Die thermoplastischen Polyurethanelastomere können zur Herstellung von Formkörpern (z.B. durch Form-, Preß- und Spritzguß) wie Platten, Behältern, Geräteteilen, Gehäusen, Rollen, Zahnrädern, Maschinen- und Fahrzeugteilen, Walzen, elastischen Überzügen, Blas- und Flachfolien, Ummantelungen, Schläuchen, Kathetern. Dichtungen, Profilen, Lagerschalen, Fäden, Filamenten und Fasern eingesetzt werden.

Als Isocyanate (A) können aliphatische, cycloaliphatische, araliphatische, aromatische und heterocyclische Polyisocyanate oder beliebige Gemische dieser Polyisocyanate verwendet werden (vgl. HOUBEN-WEYL "Methoden der organischen Chemie, Band E20 "Makromolekulare Stoffe", Georg Thieme Verlag, Stuttgart, New York 1987, S. 1587-1593). Beispiele sind Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-Diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder-1,4-phenylendiisocyanat, Perhydro-2,4'-und/oder -4,4-diphenylmethandiisocyanat, Norbornan-Diisocyanate (z.B. US-PS 3 492 330), 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat.

Bevorzugt sind aromatische Diisocyanate, insbesondere die gegebenenfalls alkyl-substituierten Toluylen- und Diphenylmethandiisocyanate, aliphatische Diisocyanate, insbesondere Hexamethylendiisocyanat und cycloaliphatische Diisocyanate wie 1-Isocyanato-3,3,5-trimethyl-5-isocyanatomethylcyclohexan, Perhydro-2,4'- und/oder -4,4'-diphenylmethandiisocyanate.

Gegebenenfalls können auch Isocyanate mit einer Funktionalität > 2,0 bis 3,0 wie Triphenylmethan-4,4',4"-triisocyanat, Polyphenyl-polymethylenpolyisocyanate (z.B. erhalten durch die Anilin-Formaldehyd-Kondensation und anschließende Phosgenierung) sowie die bei der technischen Isocyanatherstellung anfallenden, Isocyanatgruppen aufweisenden Destillationsrückstände, gegebenenfalls in einem oder mehreren der vorgenannten Polyisocyanate mitverwendet werden. Dabei ist jedoch darauf zu achten, daß eine mittlere Funktionalität von zwei nicht überschritten wird, wenn die Polyurethane thermoplastisch verarbeitet werden sollen. Gegebenenfalls müssen Reaktionspartner mit höherer Funktionalität durch Mitverwendung anderer Reaktionspartner mit einer niedrigeren Funktionalität als zwei wieder ausgeglichen werden.

Dafür geeignete monofunktionelle Isocyanate sind z.B. Stearylisocyanat, Cyclohexylisocyanat und Phenylisocyanat.

Zerewitinoff-aktive Verbindungen B1 sind Verbindungen mit im Mittel mindestens 1,8 bis 3,0 zerewitinoff-aktiven Wasserstoffatomen und einem Molekulargewicht von 400 bis 10 000.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche vom Molekulargewicht 450 bis 6 000, besonders bevorzugt solche vom Molekulargewicht 600 bis 4 500, z.B. Hydroxylgruppen aufweisende Polyester, Polyether, Polycarbonate und Polyesteramide.

Geeignete Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren oder deren veresterungsfähigen Derivaten. Die Polycarbonsäuren können aliphatischer, cycloaliphatischer, aromatischer und/oder heterocyclischerer Natur sein, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endo-methylentetrahydrophthalsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, Trimethylolpropan, Trimethylolethan, ferner Di-, Tri-, Tetra- und höhere Polyethylenglykole, Di- und höhere Polypropylenglykole sowie Di- und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar. Es können jedoch auch die aus der Fettchemie bekannten hydroxyfunktionellen Polyester wie z.B. Rizinusöl und dessen Umesterungsprodukte verwendet werden.

Geeignete Polyether sind an sich bekannt und können z.B. durch Polymerisation von Epoxiden wie Ethylenoxid, Propylenoxid, Butylenoxid, Styroloxid oder Epichlorhydrin oder von Tetrahydrofuran mit sich selbst, z.B. in Gegenwart von Lewis-Katalysatoren wie Bortrifluorid, oder durch Anlagerung der Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol(1,3) oder -(1,2), Wasser, 4,4'-Dihydroxydiphenylpropan, Anilin, Ethanolamin oder Ethylendiamin hergestellt werden.

Als Hydroxylgruppen aufweisende Polycarbonate kommen solche der an sich bekannten Art in Betracht, die z.B. durch Umsetzung von Diolen wie Propandiol(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-OS 1 694 080, 2 221 751).

Geeignete Polyesteramide und Polyamide sind z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Ebenfalls geeignet sind Polyhydroxyverbindungen, in welchen hochmolekulare Polyaddukte bzw. Polykondensate oder Polymerisate in feindisperser, gelöster oder pfropfpolymerisierter Form enthalten sind. Solche modifizierten Polyhydroxyverbindungen können z.B. erhalten werden, wenn man die Polyaddition (z.B. Umsetzung von Polyisocyanaten mit aminofunktionellen Verbindungen) bzw. Polykondensationsreaktionen (z.B. von Formaldehyd mit Phenolen und/oder Aminen) in Gegenwart der Hydroxylgruppen aufweisenden Verbindungen ablaufen läßt. Derartige Verfahren sind beispielsweise in DE-AS 1 168 075 und 1 126 142, sowie DE-OS 2 324 134, 2 423 984, 2 512 385, 2 513 815, 2 220 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxyverbindung zu vermischen und anschließend aus dem Gemisch Wasser zu entfernen.

Auch durch Vinylpolymerisation modifizierte Polyhydroxylverbindungen, wie sie z.B. durch Polymerisation von Styrol und Acrylnitril in Gegenwart von Polyethern (US-PS 3 383 351, 3 323 093, 3 110 695, DE-AS 1 152 536) oder Polycarbonatpolyolen (DE-PS 1 769 795, US-PS 3 637 909) erhalten werden sind geeignet. Auch Hydroxylgruppen aufweisende Polybutadiene sind geeignet.

Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Zerewitinoff-aktive Verbindungen (B2) -Kettenverlängerungsmittel- besitzen im Mittel 1,8 bis 3,0 zerewitinoff-aktive Wasserstoffatome und ein Molekulargewicht von 62 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Beispiele für Verbindungen (B2) sind Di- und Polyole wie Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Hexantriol-(1,2,6), Trimethylolethan, und Pentaerythrit, Di-, Tri-, Tetra- und höhere Polyethylenglykole mit einem Molekulargewicht bis 400, sowie Di- und höhere Polypropylenglykole mit einem Molekulargewicht bis 400, 4,4'-Dihydroxydiphenolpropan, Di(hydroxymethyl)hydrochinon, Ethanolamin, Diethanolamin, N-Methyldiethanolamin, Triethanolamin und 3-Aminopropanol; aliphatische Diamine wie z.B. Ethylendiamin, 1,4-Tetramethylendiamin, Hexamethylendiamin, sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-dimainodiphenylmethan, p-Xylylendiamin und Bis-(3-aminopropyl)methylamin; aromatische Diamine seien Bisanthranilsäureester, 3,5- und 2,4-Diaminobenzoesäureester, 3,3'-Dichlor-4,4'-diamino-diphenylmethan, Tolylendiamin und 4,4'-Diaminodiphenylmethan.

Gegenüber Isocyanaten monofunktionelle Verbindungen können in Anteilen bis zu 2 Gew.-%, bezogen auf TPU, als sogenannte Kettenabbrecher mitverwendet werden. Geeignet sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol und Ethylenglykolmonomethylether.

Die gegenüber Isocyanat reaktiven Verbindungen müssen so gewählt werden, daß ihre mittlere Funktionalität zwei nicht überschreitet, wenn thermoplastisch verarbeitbare Polyurethanelastomere hergestellt werden sollen. Wenn höherfunktionelle Verbindungen verwendet werden, muß daher durch Mitverwendung monofunktioneller Verbindungen die Gesamtfunktionalität auf ca. 2 vermindert werden

Die relativen Mengen der Verbindungen (B1) und (B2) in (B) werden bevorzugt so gewählt, daß das Verhältnis der Summe der Isocyanatgruppen in (A) zu der Summe der zerewitinoffaktiven Wasserstoffatome in (B) 0,9: 1 bis 1,2:1 beträgt.

Die erfindungsgemäßen thermoplastischen Polyurethanelastomere können als (C) bevorzugt bis maximal 20 Gew.-% (bezogen auf die Gesamtmenge an TPU) weiterer üblicher Hilfs- und Zusatzstoffe enthalten.

Dies sind u.a. an sich bekannte Katalysatoren z.B. tertiäre Amine, wie Triethylamin, N-Methylmorpholin, N-Ethylmorpholin, N,N,N',N'-Tetramethylethylendiamin, Pentamethyldiethylentriamin, 1,4-Diazabicyclo[2,2,2]octan, N-Methyl-N'-dimethylaminoethylpiperazine (DE-OS 2 636 787), N,N-Dimethylbenzylamin, N,N-Dimethylcyclohexylamin, 2-Methylimidazol, monocyclische und bicyclische Amidine (DE-OS 1 720 633), Bis-(dialkylamino)alkylether (US-PS 3 330 782, DE-AS 1 030 558, DE-OS 1 804 361, 2 618 280) sowie Amidgruppen (vorzugsweise Formamidgruppen aufweisende tertiäre Amine gemäß DE-OS 2 523 633 und 2 732 292). Als Katalysatoren können auch weitere organische Metallverbindungen, insbesondere organische Zinnverbindungen, verwendet werden. Als organische Zinnverbindungen kommen neben schwefelhaltigen Verbindungen wie Di-n-octylzinnmercaptid (DE-AS 1 769 367, US-PS 3 645 927) vorzugsweise Zinn(II)salze von Carbonsäuren wie Zinn(II)acetat, Zinn(II)octoat und Zinn(II)laurat sowie Zinn(IV)-Verbindungen, wie z.B. Dibutylzinnoxid, Dibutylzinndilaurat oder Dioctylzinndiacetat in Betracht. In Betracht kommen weiterhin: Titan-, Bismuth- und Antimonverbindungen wie z.B. Antimontriisopropoxid, Antimonoctoat, Antimontallat, Bismuthsalze von Carbonsäuren mit 2 bis 20 Kohlenstoffatomen wie z.B. Bismuthtrioctanoat, Dibutylbismuthoctanoat, Triphenylbismuthdidecanoat und Dibutyltitanbis(acetylacetonat).

Weitere verwendbare Katalysatoren sowie Einzelheiten über die Wirkungsweise der Katalysatoren sind in Kunststoff-Handbuch Band VII Polyurethane, herausgegeben von Vieweg und Höchtlern, Carl-Hanser-Verlag, München 1966, z.B. auf den Seiten 96 bis 102, beschrieben.

Die Gesamtmenge an Katalysatoren in den erfindungsgemäßen TPU beträgt in der Regel etwa 0 bis 5 Gew.-%, bevorzugt 0 bis 2 Gew.-%, bezogen auf die der Gesamtmenge an TPU.

Weitere Zusatz- und Hilfsstoffe sind z.B. Pigmente, Farbstoffe, Flammschutzmittel wie z.B. Tris(chlorethyl)phosphat, Trikresylphosphat oder Ammoniumphosphat und -pyrophosphat, Stabilisatoren gegen Alterungs- und Witterungseinflüsse, Weichmacher, Gleit- und Entformungsmittel, fungistatisch und bakteriostatisch wirkende Substanzen sowie Füllstoffe wie Calciumcarbonat, Kieselgel, Bariumsulfat, Calciumsulfat, Kaolin, Bentonit, Zeolithe, gemahlenes Glas, Glaskugeln, Glas-, Kunststoff- oder Kohlefasern, Quarzsand oder Quarzmehl, Siliciumcarbid, Aluminiumtrihydrat, Kreide, Dolomit oder Mischungen hiervon.

Die Ausgangsverbindungen (A), (B) und (C) werden in der ersten Stufe des Verfahrens in einem Statikmischer zu einer im wesentlichen unreagierten Mischung gemischt. Es ist allerdings zulässig, daß bis zu 10 Gew.-%, bevorzugt bis zu 5 Gew.-%, der in der reaktiven Mischung vorhandenen Isocyanatgruppen reagieren.

Die Isocyanate (A) können als monomere Di- oder Polyisocyanate oder bevorzugt aber als Vorpolymere eingesetzt werden. Vorpolymere können hergestellt werden, indem man die Gesamtmenge oder einen Teil von (A) mit der Gesamtmenge oder einem Teil von (B1) gegebenenfalls in Anwesenheit der Hilfsmittel (C) bei 30 bis 220°C, bevorzugt 60 bis 180°C, besonders bevorzugt 100 bis 160°C, umsetzt. Die Herstellung von isocyanathaltigen Vorpolymeren, ihre Aufarbeitung und Verwendung ist prinzipiell bekannt (s. z.B. Methoden der organischen Chemie (Houben-Weyl), Bd. E 20, G. Thieme Verlag, Stuttgart, New York, 1987, S. 1613-1617). Die Vorpolymeren können diskontinuierlich, beispielsweise in einem Rührkessel, oder kontinuierlich z.B. nach den in EP-A 0 571 828 oder EP-A 0 571 831 beschriebenen Verfahren hergestellt werden.

Im Falle, daß (A) als monomere Di- oder Polyisocyanate eingesetzt werden, beträgt (B1) 20 bis 85 Äquivalent-% (bezogen auf die Isocyanatgruppen in (A)) und (B2) 15 bis 90 Äquivalent-% (bezogen auf die Isocyanatgruppen in (A)).

Das Gemisch, welches den ersten Statikmischer verläßt, wird durch einen zweiten Statikmischer unter Bedingungen geführt, in denen die Reaktion zwischen (A) und (B) stattfindet. Hierbei ist bevorzugt, daß die Isocyanatgruppen im reaktiven Gemisch zu mindestens 40 %, bevorzugt zu mindestens 60 %, besonders bevorzugt zu mindestens 90 %, umgesetzt wurden. Der Umsatz hängt vorwiegend von der Temperatur des zweiten Statikmischers und der Verweilzeit des reaktiven Gemisches im zweiten Statikmischer ab. Mit steigender Temperatur und steigender Verweilzeit steigt der Umsatz. Die Bestimmung des Umsatzes beim Verlassen des zweiten Statikmischers in z.B. durch titrimetrische Bestimmung möglich, z.B. durch Umsetzung der Isocyanatgruppen mit einer überschüssigen Menge Di-n-Butylamin und Rücktitration mit Salzsäure.

Erfindungsgemäß können für beide Reaktionsstufen Statikmischer eingesetzt werden, wie sie z.B. in Chem.-Ing.-Techn. 52 Nr. 4 auf den Seiten 285 bis 291 sowie in "Mischen von Kunststoff und Kautschukprodukten", VDI-Verlag, Düsseldorf 1993 beschrieben sind.

Bevorzugt sind Statikmischer vom Typ SMX der Firma Sulzer Chemtech, Winterthur, Schweiz. Ebenfalls wird zum Mischen ein Statikmischer eingesetzt, der eine Schergeschwindigkeit von >100 s⁻¹ bis 100 000 s⁻¹ aufweist, bevorzugt von > 500 s⁻¹ bis 50 000 s⁻¹. Weiterhin wird in Stufe 2 ein Statikmischer eingesetzt, der eine Schergeschwindigkeit von < 100 s⁻¹ aufweist, bevorzugt von >10 s⁻¹. Zur schnellen Vermischung der Komponenten (A) und (B) kann ein Strahlmischer eingesetzt werden.

Das TPU, welches den zweiten Statikmischer verläßt, kann gegebenenfalls weiter bearbeitet werden, z.B. durch Temperung des Polymers in Form von Platten oder Blöcken, Zerkleinerung oder Granulierung in Shreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine handeln, die möglichst mit keinen oder nur mit wenigen Knetelementen bestückt ist.

Die nach dem erfindungsgemäßen Verfahren hergestellten TPU haben deutlich bessere mechanische und thermische Eigenschaften als vergleichbare Polymere, die nach Verfahren des Standes der Technik hergestellt wurden. Dies gilt vor allem für ihre elastischen Eigenschaften wie Zugdehnung und Zugfestigkeit und ihre thermischen Eigenschaften wie Wärmestand. Die erfindungsgemäßen TPU können auf übliche Weise zur Herstellung von Form-, Preß- und Spritzgußteilen, Thermoformteilen, Halbzeugen, Platten, Behältern, Geräteteilen, Gehäusen, Rollen, Zahnrädern, Maschinen- und Fahrzeugteilen, Walzen, elastischen Überzügen, Blas- und Flachfolien, Ummantelungen, Schläuchen, Kathetern, Dichtungen, Profilen, Lagerschalen, Fäden, Filamenten und Fasern verwendet werden. Sie können generell in vorteilhafter Weise dort eingesetzt werden, wo thermoplastisch verarbeitbare Materialien eingesetzt werden.

### Ausführungsbeispiele

| **Eingesetzte Hilfsstoffe** | |
|---|---|
| Oxidationsschutzmittel | Pentaerythrit-tetrakis[3(3,5-di-tert.-butyl-4-hydroxyphenyl)propionsäureester], |
| Hydrolyseschutzmittel | N,N'-Methantetraylbis-2,6-bis(1-methylethyl)-anilin, |
| Formtrennmittel | Ethylendiaminbisstearylamid. |

### Beispiel 1

### Herstellung des Prepolymers 1

Man entwässert in einem 6 l Dreihalskolben mit mechanischer Rührung, Innenthermometer und Stickstoffeinlaß 3 000,0 g (1,33 Mol) eines Polyesters aus Adipinsäure und Butandiol mit einem mittleren Molekulargewicht von 2 250 g/Mol 4 Stunden bei 140°C und einem Druck von 10 mbar. Anschließend werden 18,0 g Formtrennmittel, 3,0 g Oxidationsschutzmittel und 30,0 g Hydrolyseschutzmittel zugegeben. Der Inhalt wird auf 70°C gekühlt, 1 244,58 g (4,98 Mol) 4,4'-Diphenylmethandiisocyanat zugeben, nach 10 Minuten die Temperatur auf 100°C erhöht und 2 Stunden bei 100°C nachgerührt. Man erhält ein Prepolymer mit einem titrierbaren Isocyanat-Gehalt von 6,4 %.

### Herstellung des thermoplastischen Polyurethan-Elastomers

Der Reaktor besteht aus zwei Statikmischern (SMX, Sulzer AG). Statikmischer 1 besitzt einen Durchmesser von 6 mm, eine Länge von 35 mm und eine Scherrate von 500 s⁻¹. Statikmischer 2 besitzt einen Durchmesser von 34 mm, eine Länge von 270 mm, eine Scherrate von 3 s⁻¹ und einen beheizbaren Mantel, der auf 180°C beheizt wird. In den ersten Statikmischer werden 5 000 g Prepolymer 1 und 336,2 g Butandiol kontinuierlich je Stunde dosiert. Das aus Statikmischer 1 austretende Gemisch wird in Statikmischer 2 geführt. Die aus Statikmischer 2 austretende Polymerschmelze wird abgekühlt und 16 Stunden bei 110°C nachgeheizt. Das zerkleinerte Polymer wird zu Spritzgußplatten verarbeitet und die Eigenschaften der Spritzgußplatten bestimmt.

### Vergleichsbeispiel 1

### TPU gleicher Bruttozusammensetzung nach dem Extruderverfahren

In die Einspeisetrichter einer üblichen Schneckenmaschine werden 5 000 g Prepolymer 1 und 336,2 g Butandiol kontinuierlich je Stunde dosiert. Die Temperaturführung der verschiedenen Gehäuse ist wie folgt:

| Gehäuse | 1 | 2 | 3 | 4 | 5 | 6 | 7 | Düse |
|---|---|---|---|---|---|---|---|---|
| Temp. in °C | 180 | 200 | 200 | 200 | 200 | 180 | 170 | 180 |

Der Polymerstrang wird an der Düse abgenommen, durch ein Wasserbad geführt, granuliert und 16 Stunden bei 110°C nachgeheizt. Aus dem Granulat werden Spritzgußplatten hergestellt, deren Eigenschaften gemessen werden.

### Eigenschaften

| Polymer aus Beispiel | Reißfestigkeit [MPa] | Reißdehnung [%] | Erweichungstemp. [°C] | Glastemperatur in [°C] | Härte Shore A |
|---|---|---|---|---|---|
| 1 | 62 | 486 | 145 | -24 | 86 |
| Vergleich | 40 | 450 | 120 | -26 | 85 |

Das Beispiel 1 zeigt, daß im Vergleich zum Vergleichsbeispiel die Zugfestigkeit des erfindungsgemäßen TPU deutlich erhöht wurde.

## Patentansprüche

1. Verfahren zur Herstellung thennoplastischer Polyurethanelastomerer (TPU), worin man ein oder mehrere Isocyanate (A) und eine zerewitinoffaktive Wasserstoffatome aufweisende Mischung (B) aus
1) 1 bis 85 Äquivalent-% (bezogen auf die Isocyanatgruppen in (A)) einer oder mehreren Verbindungen mit im Mittel mindestens 1,8 zerewitinoffaktiven Wasserstoffatomen und einem Molekulargewicht von 450 bis 10 000,
2) 15 bis 99 Äquivalent-% (bezogen auf die Isocyanatgruppen in (A)) einer oder mehrerer Kettenverlängerungsmittel mit im Mittel mindestens 1.8 zerewitinoffaktiven Wasserstoffatomen und einem Molekulargewicht von 62 bis 400, sowie gegebenenfalls
0 bis 20 Gew.-% (bezogen auf Gesamtmenge an thermoplastischem Polyurethanelastomer) weiterer üblicher Hilfs- und Zusatzstoffe C)
in einem Statikmischer mit einer Schergeschwindigkeit von >100s⁻¹ bis 100 000s⁻¹ homogen vermischt, so daß keine Reaktion zwischen (A) und (B) eintritt, und danach das Gemisch einem zweiten Statikmischer mit einer Schergeschwindigkeit von <100s-1 zuführt, in dem (A) und (B) miteinander reagieren.

2. Verfahren nach Anspruch 1, worin man
i) aus zumindest Teilen von (A) und (B) gegebenenfalls in Anwesenheit von zumindest Teilen von (C) ein Vorpolymer herstellt und
ii) dieses Vorpolymer zusammen mit den restlichen Ausgangsstoffen (A), (B) und (C) in dem ersten Statikmischer mischt und danach in dem zweiten Statikmischer umsetzt.

3. Verfahren nach Anspruch 1, in dem das thermoplastische Polyurethanelastomer zusätzlich kontinuierlich entgast und in einen Strang umgeformt wird.

## Claims

1. Process for the production of thermoplastic polyurethane elastomers (TPU), in which process one or more isocyanates (A) and a mixture (B) containing Zerewitinoff active hydrogen atoms prepared from
1) 1 to 85 equivalent-% (relative to the isocyanate groups in (A)) of one or more compounds having an average of at least 1.8 Zerewitinoff active hydrogen atoms and a molecular weight of 450 to 10000,
2) 15 to 99 equivalent-% (relative to the isocyanate groups in (A)) of one or more chain extenders having an average of at least 1.8 Zerewitinoff active hydrogen atoms and a molecular weight of 62 to 400, optionally together with
0 to 20 wt.% (relative to the total quantity of thermoplastic polyurethane elastomer) of further conventional auxiliary substances and additives C)
are homogeneously mixed in a static mixer at a shear rate of >100 s⁻¹ to 100000 s⁻¹ under conditions in which no reaction occurs between (A) and (B), and the mixture is then passed into a second static mixer at a shear rate of <100 s⁻¹, in which (A) and (B) react together.

2. Process according to claim 1, in which
i) a prepolymer is produced from at least a proportion of (A) and (B), optionally in the presence of at least a proportion of (C) and
ii) this prepolymer is mixed with the remaining starting materials (A), (B) and (C) in the first static mixer and is then reacted in the second static mixer.

3. Process according to claim 1, in which the thermoplastic polyurethane elastomer is additionally continuously degassed and shaped into a strand.

## Revendications

1. Procédé pour la préparation d'élastomères de polyuréthannes thermoplastiques (TPU), dans lequel on soumet à un mélange homogène un ou plusieurs isocyanates (A) et un mélange (B) présentant des atomes d'hydrogène actifs dosables par réaction de Zerewitinoff, constitué
1) à concurrence de 1 à 85 équivalents-% (rapportés aux groupes isocyanate dans (A)), par un ou plusieurs composés comprenant en moyenne au moins 1,8 atome d'hydrogène actif dosables par réaction de Zerewitinoff et possédant un poids moléculaire de 450 à 10.000,
2) à concurrence de 15 à 99 équivalents-% (rapportés aux groupes isocyanate dans (A)), par un ou plusieurs agents d'allongement de chaînes comprenant en moyenne au moins 1,8 atome d'hydrogène actif dosable par réaction de Zerewitinoff et possédant un poids moléculaire de 62 à 400, ainsi que le cas échéant
à concurrence de 0 à 20% en poids (rapportés à la quantité totale de l'élastomère de polyuréthanne thermoplastique), par d'autres adjuvants et additifs habituels (C)
dans un mélangeur statique avec une vitesse de cisaillement de plus de 100 s⁻¹ à 100.000 s⁻¹ de telle sorte qu'aucune réaction n'intervienne entre (A) et (B), et on achemine ensuite le mélange à un second mélangeur statique avec une vitesse de cisaillement de moins de 100 s⁻¹, dans lequel on fait réagir (A) et (B) l'un avec l'autre.

2. Procédé selon la revendication 1, dans lequel
i) on prépare un prépolymère constitué au moins par des parties de (A) et de (B) le cas échéant en présence d'au moins des parties de (C), et
ii) on mélange ce prépolymère de manière conjointe avec les matières de départ résiduelles (A), (B) et (C) dans le premier mélangeur statique, puis on le fait réagir dans le second mélangeur statique.

3. Procédé selon la revendication 1, dans lequel on purge en outre en continu l'élastomère de polyuréthanne thermoplastique et on le transforme en un boudin.
